(19) **Europäisches Patentamt**
**European Patent Office**
**Office européen des brevets**

(11) **EP 1 593 568 B1**

(12) **EUROPÄISCHE PATENTSCHRIFT**

(45) Veröffentlichungstag und Bekanntmachung des Hinweises auf die Patenterteilung:
**04.08.2010 Patentblatt 2010/31**

(51) Int Cl.:
**B60T 8/17** *(2006.01)*

(21) Anmeldenummer: **04360046.9**

(22) Anmeldetag: **05.05.2004**

(54) **Verfahren zum Ermitteln einer Bremsverzögerung**

Method for calculating a braking deceleration

Procédé de calculation d'une décélération de freinage

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**09.11.2005 Patentblatt 2005/45**

(73) Patentinhaber: **Alcatel Lucent**
**75008 Paris (FR)**

(72) Erfinder:
• **Karner, Georg**
**2103 Langenzersdorf (AT)**

• **Brandstetter, Gerald**
**2842 Edlitz (AT)**
• **Scheck, Oliver**
**1220 Wien (AT)**

(74) Vertreter: **Kohler Schmid Möbus**
**Patentanwälte**
**Ruppmannstraße 27**
**70565 Stuttgart (DE)**

(56) Entgegenhaltungen:
**DE-A- 3 311 041    DE-A- 10 248 840**
**FR-A- 2 370 318**

EP 1 593 568 B1

**Beschreibung**

Stand der Technik

Die Erfindung betrifft ein Verfahren zum Ermitteln einer Bremsverzögerung a' eines Zuges, insbesondere zum Anbremsen einer Geschwindigkeitsbegrenzung, bei dem eine mittlere Bremsverzögerung a für eine Bremsung bis zum Stillstand ermittelt wird, wobei eine Totzeit $t_0$ für das Ansprechen der Bremsen ermittelt wird und aus der mittleren Bremsverzögerung a, der Totzeit $t_0$ und einem typischen Bremsweg s die Bremsverzögerung a' ermittelt wird.

Es ist bekannt, eine mittlere Verzögerung für den gesamten Anhalteweg eines Zuges bis zum Stillstand zu berechnen. In die mittlere Verzögerung ist die Ansprechzeit der Bremsen eingerechnet. Die so ermittelte mittlere Verzögerung ist ausreichend für eine Bremsung bis zum Stillstand, jedoch nicht zum Anbremsen von Geschwindigkeitsrestriktionen. Bei der bekannten Berechnung der mittleren Bremsverzögerung werden sogenannte Bremshundertstel berücksichtigt. Bremshundertstel sind die eisenbahntechnische Einheit für die Bremskraft eines Wagens (oder auch die des Zuges). Sie drücken das Verhältnis zwischen Fahrzeuggewicht (Zuggewicht) und Bremsgewicht aus, wobei das Bremsgewicht die Bremsleistung eines Fahrzeugs oder Zugs beschreibt. Die Bremshundertstel BRH für einen Gesamtzug werden folgendermaßen berechnet:

$$BRH = \frac{(Gesamtbremsgewicht\_in\_Tonnen) \cdot 100}{Gesamtgewicht\_in\_Tonnen}$$

Die Bremshundertstel gelten grundsätzlich für die Bremsung bis zum Stillstand. Daher ist es zulässig, zwecks rechnerischer Vereinfachung, eine mittlere Verzögerung ohne Totzeit zu berechnen. Beim Anbremsen einer Geschwindigkeitsrestriktion führt das Weglassen der Totzeit jedoch zu einer Überschätzung des Bremsvermögens des Zuges. Somit würde eine eventuell notwendige Zwangsbremsung oder Notbremsung zu spät vorgenommen. Die Überschätzung des Bremsvermögens liegt darin begründet, dass die Zugbremse eine gewisse Ansprechzeit hat. Erst wenn diese überwunden ist, sprechen die Bremsen richtig an. Die tatsächliche Bremsverzögerung wird daher durch die mittlere Bremsverzögerung nur unzureichend beschrieben.

In der DE 102 48 840 A1 ist ein Verfahren zur automatischen Haltestellenanfahrt mit einem Kraftfahrzeug beschrieben. Es wird beschrieben, dass eine Längsdynamik-Trajektorie bestimmt wird, wobei ein gewünschter Verlauf der Bremsverzögerung über den gesamten Anhalteweg vorgegeben werden kann. Bevorzugt wird eine mittlere Bremsverzögerung über den gesamten Anhaltevorgang zu Grunde gelegt. Weiterhin wird erwähnt, dass eine Reaktionszeit eines Längsregelsystem, welche die Ansprechzeit einer Bremsanlagenstelleinheit beinhaltet, berücksichtigt werden kann.

In der DE 33 11 041 A1 ist ein Verfahren zur Bestimmung der Zwangsbremsverzögerung von spurgebundenen Fahrzeugen beschrieben. Dazu werden Fahrzeuge in einem Prüfgleis zwangsgebremst. Aus den (tatsächlichen) Bremswegen werden die zugehörigen Bremsverzögerungen ermittelt und daraus die kleinste Bremsverzögerung bestimmt. Verzögerungszeiten beim Ansprechen der Bremsen werden für verschiedene Fahrzeugtraktionen ermittelt, d.h. für unterschiedliche Beladungszustände und unterschiedliche Wagenanzahlen.

Aufgabe der Erfindung

Aufgabe der Erfindung ist es, ein Verfahren zur Ermittlung einer Bremsverzögerung zu schaffen, mit der Bremskurven zuverlässig berechnet werden können.

Gegenstand der Erfindung

Gelöst wird diese Aufgabe erfindungsgemäß durch ein Verfahren mit den Merkmalen des Anspruchs 1.

Durch die Berücksichtigung einer Totzeit wird die Bremskurve für Geschwindigkeitsbeschränkungen verbessert. Die Bremsung eines Zuges zum Anbremsen einer Geschwindigkeitsbegrenzung kann daher rechtzeitig beginnen. Über den typischen Bremsweg kann die mittlere Bremsverzögerung ermittelt werden, die anhand der Totzeit korrigiert wird. Als Bremsweg kann beispielsweise ein Wert von 1000 m vorgegeben werden. Mit einem derartigen Wert werden Werte für die Bremsverzögerung a' erzielt, die für unterschiedliche Zug- und Streckenbeschaffenheiten eingesetzt werden können.

Besonders vorteilhaft ist es, wenn die Bremsverzögerung a' in Abhängigkeit des Bremsgewichts, des Zuggewichts und der Zuglänge ermittelt wird. Für die Ermittlung der Bremsverzögerung eines Zuges, mit der Bremskurven berechnet werden können, muss ein Zugführer daher nur drei Parameter, die ihm bei normalem Betrieb ohnehin vorliegen, eingeben. Dies gilt insbesondere, wenn die Bremsart vorgegeben und voreingestellt ist.

Wenn die Bremsverzögerung darüber hinaus in Abhängigkeit der Bremsart ermittelt wird, kann für jeden Zug die optimale Bremsverzögerung a' ermittelt werden. Als Bremsart kommen beispielsweise ein Reisezug, Schnellzug, Nahverkehrszug oder Güterzug in Betracht. Die Bremsart kann für jeden Zug fest vorgegeben sein oder dem Zugführer bekannt gegeben werden, so dass dieser die Bremsart vor Beginn der Fahrt einstellen kann.

Bei einer bevorzugten Weiterbildung des Verfahrens wird die Totzeit $t_0$ in Abhängigkeit von der Bremsart ermittelt. Durch diese Maßnahme kann die Bremsart besonders einfach in die Ermittlung der Bremsverzögerung a' einbezogen werden.

Bei einer vorteilhaften Weiterbildung ist vorgesehen, dass die Bremsverzögerung a' unter der Annahme erfolgt, dass nach der Totzeit $t_0$ die Bremsung mit einer konstanten Bremsverzögerung erfolgt und dass der Anfangs- und Endpunkt der Bremskurve mit der mittleren Bremsverzögerung a und der Bremskurve mit der Bremsverzögerung a' übereinstimmen. Mit diesen Annahmen kann eine Umrechnung der mittleren Bremsverzögerung auf eine realistische Bremsverzögerung unter Verwendung der Totzeit $t_0$ erfolgen.

Eine Bremsverzögerung a', die zur Ermittlung von Bremskurven verwendet werden kann, wird vorzugsweise gemäß der folgenden Formel ermittelt:

$$a' = \frac{v^2}{2 \cdot (s - v \cdot t_0)},$$

wobei

$$v = \sqrt{2 \cdot a \cdot s}$$

Dies bedeutet, dass der Geschwindigkeitswert v aus der mittleren Beschleunigung a ermittelt wird. In die Formel für a' wird der typische Bremsweg s eingegeben, wobei es sich als vorteilhaft erwiesen hat, einen Wert von 1000 m für s zu wählen. Die Herleitung der oben genannten Formeln erfolgt aus den bekannten Gleichungen:

$$s = \tfrac{1}{2} a \cdot t^2 \qquad (1)$$

$$v = a \cdot t \qquad (2).$$

Aus (1) ergibt sich

$$t = \sqrt{\frac{2 \cdot s}{a}} \qquad (3).$$

Aus (2) und (3) ergibt sich

$$v = \sqrt{2 \cdot a \cdot s} \qquad (4).$$

Aus (4) ergibt sich

$$s = \frac{1}{2} \frac{v^2}{a} \qquad (5).$$

Die tatsächliche Bremskurve $s_1$ ergibt sich zu

$$s_1 = v \cdot t_0 + \frac{v^2}{2a'} \quad (6).$$

Daraus lässt sich a' unter der Annahme s = $s_1$ wie oben beschrieben ermitteln. a' eingesetzt in (6) ergibt eine Bremskurve.

Die Totzeit $t_0$ wird ermittelt als $t_0 = \frac{2}{\kappa} [s]$, wobei $\kappa$ ein Korrekturkoeffizient für die Zuglänge ist, der auch die Bremsart berücksichtigen kann. Dies bedeutet, dass $\kappa$ aus den Anlagen K1 und K2 zu UIC Merkblatt 544-1 (Merkblätter werden vom internationalen Eisenbahnverband UIC herausgegeben) ermittelt werden kann. Alternativ kann $\kappa$ mittels einer rechnerischen Vereinfachung ermittelt werden, wobei die Vereinfachung auf die sichere Seite führt, d.h. die Bremsleistung eher unterschätzt als überschätzt wird. Dies bedeutet, dass auf jeden Fall eine Bremsverzögerung, die groß genug ist, ermittelt wird. Insbesondere kann vorgesehen sein, dass bei Reisezügen der Korrekturkoeffizient $\kappa$ bis zu einer Zuglänge von 400 m den Wert 1 aufweist und dann linear bis zu einer Zuglänge von 700 m auf den Wert 0,72 fällt. Diese Linie kann extrapoliert werden, so dass beispielsweise bei einer Zuglänge von 800 m ein Wert von $\kappa$ = 0,63 erreicht wird. Der Korrekturkoeffizient $\kappa$ kann bei einem Güterzug beispielsweise bis zu einer Zuglänge von 500 m den Wert 1 annehmen und dann bis zu einer Zuglänge von 700 m linear auf 0,9 fallen.

Vorzugsweise wird die mittlere Bremsverzögerung a folgendermaßen ermittelt: $a = \frac{\left[6,1 \cdot \Psi \cdot \left(1 + \frac{BRH}{10}\right)\right]}{2 \cdot 3,85 \cdot 3,6^2}$,

insbesondere $a = 0,061 \cdot \left(1 + \frac{BRH}{10}\right)$, wobei BRH Bremshundertstel sind und $\psi$ die Bremsart modelliert.

Bei dieser Formel handelt es sich um die so genannte "Mindener" Formel. Die Werte $\psi$ schwanken zwischen etwa 0,9 und 1,1, wobei $\psi$ die Bremsart modelliert, beispielsweise ob es sich um einen Personenzug, einen Schnellzug oder um einen Güterzug handelt. Mit dem Wert von $\psi$ = 1 und einer Rundung gelangt man zu der Formel $a = 0,061 \left(1 + \frac{BRH}{10}\right)$. Diese Formel gibt eine gute Näherung für die mittlere Verzögerung und wird seit längerem in Berechnungen der Österreichischen Bundesbahn ÖBB verwendet. Mit einer Bremsverzögerung a', die aus der Bremsverzögerung a ermittelt wurde, lassen sich somit alle Aspekte des ETCS-Betriebs (European Train Control System) abdecken. Insbesondere mit der oben genannten Formel für a' lassen sich gute Übereinstimmungen mit den bei der ÖBB gebräuchlichen Bremstafeln erreichen. Die Abweichungen sind über einen weiten Bereich relativ gering. Speziell die Werte für einen Abstand zwischen Vorsignal und Hauptsignal von 1000 m (d.h. ein Bremsweg von 1000 m wurde bei der Ermittlung von v verwendet) zeigen eine gute Übereinstimmung mit den Mittelwerten von mittleren Verzögerungen a, die für ein bestimmtes Bremsausmass (das durch die Bremshundertstel definiert ist) für jede Kombination von Geschwindigkeit und laut Bremstafel erforderlichem Bremsweg gemäß Formel (5) berechnet wurden. Durch Bremstafeln wird die zulässige Höchstgeschwindigkeit eines Zuges in Abhängigkeit seiner Bremshundertstel und des Vorsignalabstandes auf der Strecke definiert. Jedes derartige Tripel definiert somit Anfang und Ende einer Bremskurve.

In den Rahmen der Erfindung fallen auch ein Computerprogramm und eine Einrichtung zur Ermittlung einer Bremsverzögerung. Dies bedeutet, dass das erfindungsgemäße Verfahren als Hardware oder Software implementiert werden kann.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Zeichnung

Ein Ausführungsbeispiel ist in der schematischen Zeichnung dargestellt und wird in der nachfolgenden Beschreibung erläutert. Es zeigt:

**Fig. 1**    ein Schaubild zur Verdeutlichung der Beziehung der mittleren Bremsverzögerung a zur tatsächlichen Bremsverzögerung a';

**Fig. 2**    eine schaubildartige Darstellung des Korrekturkoeffizienten κ in Abhängigkeit der Zuglänge;

**Fig. 3**    ein Beispiel von nach dem erfindungsgemäßen Verfahren ermittelten Bremskurven.

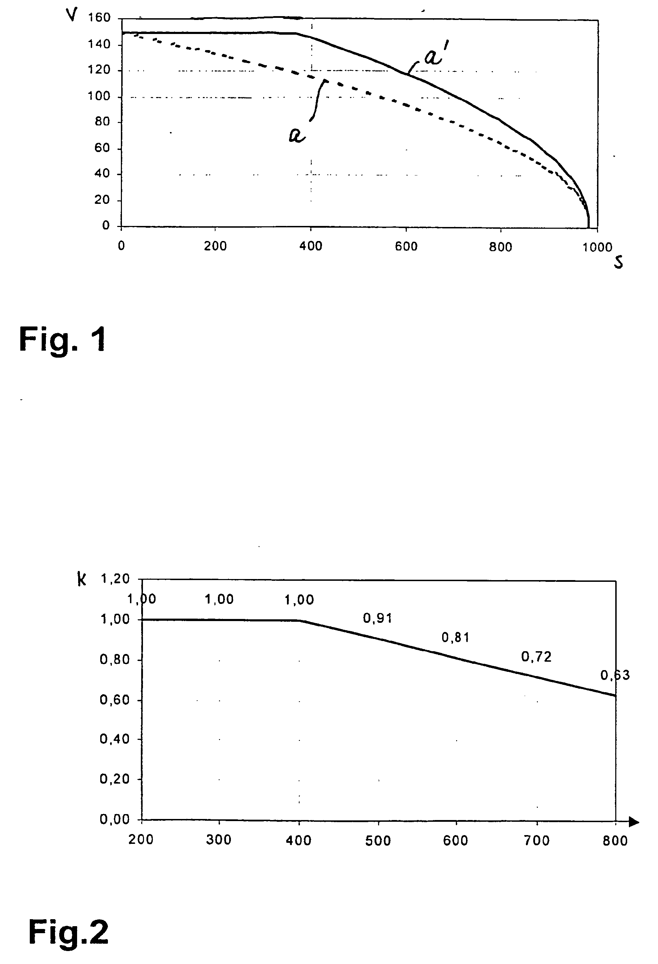

In der **Fig. 1** ist auf der Ordinate die Zuggeschwindigkeit in km/h aufgetragen und auf der Abszisse der Bremsweg. Insbesondere ist vorgesehen, dass ein Zug bei der Distanz 0 m anfängt zu bremsen und bei der Distanz 1000 m zum Stillstand kommt. Mit der gestrichelten Linie ist die Bremskurve für eine mittlere Bremsverzögerung a dargestellt. Es ist deutlich zu erkennen, dass mit zunehmender Entfernung die Geschwindigkeit stärker abfällt. Insbesondere am Anfang der Bremsung erfolgt nur eine relativ geringe Reduktion der Geschwindigkeit. Für die Bremsverzögerung a' ist die Bremskurve mit der durchgezogenen Linie gezeigt. Es wird angenommen, dass tatsächlich während der Totzeit keine Bremsverzögerung eintritt. Dies ist durch den waagrechten Strich bis zu einer Distanz von etwa 400 m dargestellt. Danach erfolgt eine Bremsung mit einer konstanten Bremsverzögerung. Bei beiden Kurven ist der Start- und Endpunkt identisch. Es ist zu erkennen, dass gemäß der gestrichelten Linie bei 200 m schon eine Geschwindigkeitsreduktion von 160 km/h auf etwa 140 km/h erfolgt sein müsste. Demnach müsste eine Strecke von 200 m ausreichend sein, eine Geschwindigkeitsrestriktion von 140 km/h anzufahren. Tatsächlich, wegen der Ansprechzeit der Bremsen, ist eine derartige Reduktion der Geschwindigkeit nach 200 m noch nicht erfolgt, was durch die Kurve für a' veranschaulicht wird. Hätte bei der Distanz 200 m eine Geschwindigkeitsrestriktion angefahren werden müssen, so wäre dies bei einer Orientierung an der Bremsverzögerung a nicht rechtzeitig erfolgt. Dadurch, dass die realistische Bremsverzögerung a' berechnet wird, kann eine Geschwindigkeitsrestriktion gezielt angefahren werden.

In der **Fig. 2** ist der Korrekturkoeffizient κ für die Totzeit in Abhängigkeit von der Zuglänge dargestellt. Bis zu einer Zuglänge von 400 m ist der Korrekturkoeffizient κ konstant bei einem Wert von 1. Danach fällt der Wert κ linear bis auf 0,72 bei 700 m. Die Linie zwischen 400 m und 700 m kann extrapoliert werden, so dass man bei einer Zuglänge von 800 m einen Korrekturkoeffizienten κ von 0,63 erhält. Das in der Fig. 2 dargestellte Schaubild gilt beispielsweise für Bremsartstellungen P und R, d.h. für Personen- und für Reisezüge. Für eine Bremsartstellung G, die einen Güterzug repräsentiert, kann eine andere Zuordnung von Korrekturkoeffizient κ und Zuglänge geeigneter sein.

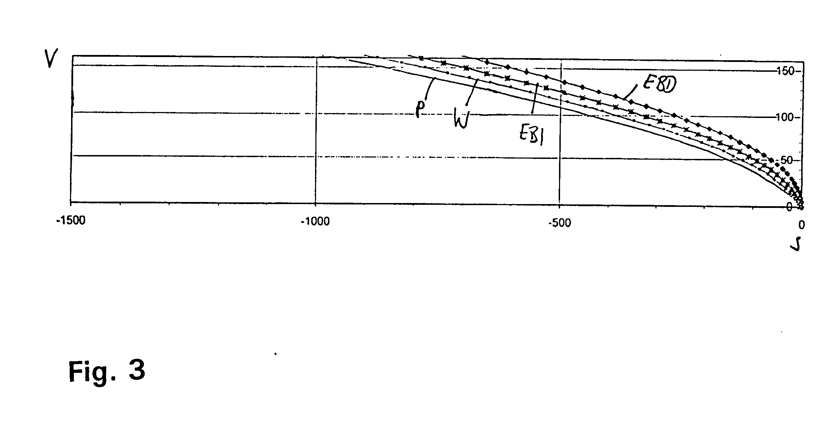

In der **Fig. 3** ist ein Bremskurvenbeispiel für einen Schnellzug der Ungarischen Staatseisenbahn (MAV) dargestellt. Der Simulation wurden die folgenden Parameter zu Grunde gelegt: ebene Fläche (Steigung = 0 %), Distanz der Balisengruppe zum Ziel: 1100 m; Distanz des Signals zum Ziel: 1000 m; Für den simulierten Zug, der eine Länge von 400 m aufweist, wurde eine maximale Geschwindigkeit von 120 km/h gemäß den Bremstafeln der Österreichischen Bundesbahn vorgegeben. Als Bremshundertstel wurde 176 gewählt und die Adhäsion wurde als 100 % angenommen. Die Totzeit für eine EB-Bremsung (Notbremsung) beträgt 2 s. Die ermittelte Verzögerung a' beträgt 1,4 m/s$^2$. Auf der Ordinate ist die Zuggeschwindigkeit in km/h aufgetragen und auf der Abszisse die Entfernung bis zum Ziel. Es sind die folgenden Bremskurven dargestellt: emergency brake deceleration (EBD), emergency brake intervention (EBI), warning (W), permitted (P). Die Kurven service brake intervention (SBI), service break deceleration (SBD) sind nicht dargestellt, da bei MAV durch einen entsprechenden ETCS-Konfigurationsparameter die Berechnung dieser Kurven unterdrückt wird.

**Patentansprüche**

1.    Verfahren zum Ermitteln einer Bremsverzögerung a' eines Zuges, insbesondere zum Anbremsen einer Geschwindigkeitsbegrenzung, bei dem eine mittlere Bremsverzögerung a für eine Bremsung bis zum Stillstand ermittelt wird, wobei eine Totzeit $t_0$ für das Ansprechen der Bremsen ermittelt wird und aus der mittleren Bremsverzögerung a, der Totzeit $t_0$ und einem typischen Bremsweg s die Bremsverzögerung a' ermittelt wird, **dadurch gekennzeichnet, dass** die Totzeit $t_0$ ermittelt wird als $t_0 = \frac{2}{\kappa}$, wobei κ ein Korrekturkoeffizient für die Zuglänge ist.

2.    Verfahren nach Anspruch 1, **dadurch gekennzeichnet, dass** die Bremsverzögerung a' in Abhängigkeit des Bremsgewichts, des Zuggewichts und der Zuglänge ermittelt wird.

3.    Verfahren nach Anspruch 1, **dadurch gekennzeichnet, dass** die Bremsverzögerung a' in Abhängigkeit der Bremsart ermittelt wird.

4.    Verfahren nach Anspruch 3, **dadurch gekennzeichnet, dass** die Totzeit $t_0$ in Abhängigkeit von der Bremsart ermittelt wird.

5. Verfahren nach Anspruch 1, **dadurch gekennzeichnet, dass** die Bremsverzögerung a' unter der Annahme erfolgt, dass nach der Totzeit $t_0$ die Bremsung mit einer konstanten Bremsverzögerung erfolgt und dass der Anfangs- und Endpunkt der Bremskurve mit der mittleren Bremsverzögerung a und der Bremskurve mit der Bremsverzögerung a' übereinstimmen.

6. Verfahren nach Anspruch 1, **dadurch gekennzeichnet, dass** die Bremsverzögerung a' gemäß der folgenden Formel ermittelt wird:

$$a' = \frac{v^2}{2 \cdot (s - v \cdot t_0)},$$

wobei

$$v = a \cdot \sqrt{\frac{2 \cdot s}{a}}$$

7. Verfahren nach Anspruch 1, **dadurch gekennzeichnet, dass** die mittlere Bremsverzögerung a folgendermaßen ermittelt wird: $a = \frac{\left[6,1 \cdot \Psi \cdot \left(1 + \frac{BRH}{10}\right)\right]}{2 \cdot 3,85 \cdot 3,6^2}$, insbesondere $a = 0,061 \cdot \left(1 + \frac{BRH}{10}\right)$, wobei BRH Bremshundertstel sind und ψ die Bremsart modelliert.

8. Computerprogramm, in dem das Verfahren nach Anspruch 1 implementiert ist.

9. Einrichtung zur Ermittlung einer Bremsverzögerung, in der das Verfahren nach Anspruch 1 implementiert ist.

**Claims**

1. Method for determining a braking deceleration a' of a train, in particular for applying the brakes at a speed limit, in which a mean braking deceleration a for braking down to a standstill is determined, a dead time $t_0$ for the response of the brakes being determined and the braking deceleration a' being determined from the mean braking deceleration a, the dead time $t_0$ and a typical braking distance s, **characterized in that** the dead time $t_0$ is determined as

$$t_0 = \frac{2}{\kappa},$$ where $\kappa$ is a correction coefficient for the train length.

2. Method according to Claim 1, **characterized in that** the braking deceleration a' is determined as a function of the brake weight, the train weight and the train length.

3. Method according to Claim 1, **characterized in that** the braking deceleration a' is determined as a function of the type of brake.

4. Method according to Claim 3, **characterized in that** the dead time $t_0$ is determined as a function of the type of brake.

5. Method according to Claim 1, **characterized in that** the braking deceleration a' is carried out under the assumption that, after the dead time to, the braking is carried out with a constant braking deceleration and **in that** the starting point and endpoint of the braking curve coincide with the mean braking deceleration a and the braking curve coincides with the braking deceleration a'.

6. Method according to Claim 1, **characterized in that** the braking deceleration a' is determined in accordance with the following formula:

$$a' = \frac{v^2}{2 \cdot (s - v \cdot t_0)},$$

where

$$v = a \cdot \sqrt{\frac{2 \cdot s}{a}}$$

7. Method according to Claim 1, **characterized in that** the mean braking deceleration a is determined in the following way: $a = \dfrac{\left[ 6.1 \cdot \psi \cdot \left( 1 + \dfrac{BRH}{10} \right) \right]}{2 \cdot 3.85 \cdot 3.6^2}$, in particular $a = 0.061 \cdot \left( 1 + \dfrac{BRH}{10} \right)$, where BRH are brake percentages and $\psi$ models the type of brake.

8. Computer program, in which the method according to Claim 1 is implemented.

9. Device for determining a braking deceleration, in which the method according to Claim 1 is implemented.

**Revendications**

1. Procédé de détermination d'une décélération de freinage a' d'un train, en particulier pour l'initialisation du freinage en vue d'une limitation de vitesse, lors de laquelle on détermine une décélération moyenne du freinage a pour un freinage allant jusqu'à l'arrêt, un temps mort $t_0$ concernant la réponse des freins étant déterminé, la décélération de freinage a' étant déterminée sur la base de la décélération moyenne du freinage a, du temps mort $t_0$ et de la distance de freinage, **caractérisé en ce que** le temps mort $t_0$ est déterminé comme $t_0 = 2/\kappa$, $\kappa$ représentant un facteur de correction concernant la longueur du train.

2. Procédé selon la revendication 1, **caractérisé en ce que** la décélération du freinage a' est déterminée en fonction du poids des freins, du poids du train et de la longueur du train.

3. Procédé selon la revendication 1, **caractérisé en ce que** la décélération du freinage a' est déterminée en fonction du type de freins.

4. Procédé selon la revendication 3, **caractérisé en ce que** le temps mort $t_0$ est déterminé en fonction du type de freins.

5. Procédé selon la revendication 1, **caractérisé en ce que** la décélération du freinage a' est exécutée en supposant qu'après le temps mort $t_0$, le freinage se fait avec une décélération constante du freinage et que le point initial et final de la courbe de freinage concordent avec la décélération moyenne du freinage a, et que la courbe de freinage concorde avec la décélération de freinage a'.

6. Procédé selon la revendication 1, **caractérisé en ce que** la décélération du freinage a' est déterminé selon la formule ci-dessous :

$$a' = \frac{v^2}{2 \cdot (s - v \cdot t_0)}, \quad \text{où} \quad v = a \cdot \sqrt{\frac{2 \cdot s}{a}}$$

7. Procédé selon la revendication 1, **caractérisé en ce que** la décélération moyenne du freinage a est déterminée de la manière suivante : $a = \frac{[6{,}1 \cdot \Psi \cdot (1 + \frac{BRH}{10})]}{2 \cdot 3{,}85 \cdot 3{,}6^2}$, notamment a = 0,061 . (1 + BRH/10), BRH représentant des centièmes de freinage et ψ modelant le type de frein.

8. Programme d'ordinateur, dans lequel est implémenté le procédé selon la revendication 1.

9. Installation servant à déterminer une décélération du freinage, dans laquelle est implémenté le procédé selon la revendication 1.

# Fig. 1

# Fig.2

Fig. 3

**IN DER BESCHREIBUNG AUFGEFÜHRTE DOKUMENTE**

**In der Beschreibung aufgeführte Patentdokumente**

- DE 10248840 A1
- DE 3311041 A1